# EUROPÄISCHE PATENTANMELDUNG

(11) **EP 0 657 217 A1**
(43) Veröffentlichungstag der Anmeldung: **14.06.1995**
(21) Anmeldenummer: 94115908.9
(22) Anmeldetag: 08.10.1994
(51) Int. Cl.: B01L 9/00, F16M 13/02, F16B 2/18

(54) **Laborgerät mit einer Aufnahme für einen Stativstab**

(30) Priorität: 08.12.1993 DE 4341774
(71) Anmelder: JANKE & KUNKEL GMBH & CO. KG, D-79219 Staufen (DE)
(72) Erfinder: König, Hans, D-79426 Buggingen-Seefelden (DE); Koch, Kai, D-79238 Ehrenstetten (DE); Dietsche, Rainer, D-79244 Münstertal (DE)
(74) Vertreter: Patent- und Rechtsanwaltssozietät, Schmitt, Maucher & Börjes

(57) **Zusammenfassung**

Ein Laborgerät, insbesondere ein Magnetrührer (1) oder ein Schüttelgerät, hat eine Aufnahme (2) für einen Stativstab (3), die an einem separaten Stativstabhalter (4) vorgesehen ist, der an dem Laborgerät verstellbar befestigt und festlegbar ist. Der Stativstab (3) kann dadurch an unterschiedlichen Stellen am Gehäuse des Laborgerätes angeordnet werden, so daß die daran befestigten Zusatzvorrichtungen, insbesondere Sensoren, Dosierer oder Schläuche, besser in der jeweils gewünschten Lage fixiert werden können. Außerdem können mehrere Stativstabhalter (4) mit jeweils einem Stativstab (3) an verschiedenen Stellen des Laborgerätes gleichzeitig befestigt werden, so daß auch bei komplexen Versuchsaufbauten genügend Befestigungsmöglichkeiten für Zusatzvorrichtungen vorhanden sind.

## Beschreibung

Die Erfindung bezieht sich auf ein Laborgerät, insbesondere einen Magnetrührer oder ein Schüttelgerät mit einer Aufnahme für einen Stativstab.

Es ist bereits bekannt, an Laborgeräten, also Geräten, die überwiegend zum Gebrauch in Laboratorien vorgesehen sind, an einer passenden Stelle eine Aufnahme, beispielsweise eine Öffnung vorzusehen, die lösbar einen Stativstab aufnehmen kann. An diesem können dann Zusatzvorrichtungen befestigt und in einer bestimmten, gewünschten Lage fixiert werden. Beispielsweise können auf diese Weise ein Thermometer oder ein Dosierer von oben her in ein auf einem Magnetrührer stehendes Gefäß eingebracht und in einer gewünschten Position fixiert werden. Dabei ist es jedoch schwierig, mehrere solcher Zusatzvorrichtungen gleichzeitig an einem Laborgerät anzubringen und diese alle an ein und demselben Stativstab festzulegen, da sich dann die Halterungen der Zusatzvorrichtungen, die beispielsweise Sensoren, Dosierer, Zufuhrschläuche oder dergleichen sein können, gegenseitig stören.

Abhängig vom Standort des Gerätes und von den örtlichen Gegebenheiten kann es ungünstig sein, den Stativstab an der vorgegebenen Aufnahme des Laborgerätes zu befestigen, wenn dieser beispielsweise mit anderen, benachbarten Geräten, in Kollision gerät oder wenn Zufuhrschläuche aus einer ganz bestimmten Richtung zugeführt werden müssen.

Es besteht deshalb die Aufgabe, ein Laborgerät der eingangs erwähnten Art zu schaffen, bei welchem die Anbringung von Sensoren oder Zusatzvorrichtungen weitgehend frei gewählt und an die jeweiligen örtlichen Gegebenheiten angepaßt werden kann.

Die Lösung dieser Aufgabe besteht darin, daß die Aufnahme an einem separaten Stativstabhalter vorgesehen ist und daß der Stativstabhalter an dem Laborgerät verstellbar befestigt und festlegbar ist. Die Aufnahme für den Stativstab ist dadurch nicht mehr an einer bestimmten Stelle des Laborgerätes fest vorgegeben, sondern kann durch den separaten, an unterschiedlichen Stellen des Laborgerätes anbringbaren Stativstabhalters angeordnet werden, so daß der Stativstab in eine jeweils günstige Position gebracht werden kann.

Besonders zweckmäßig ist, wenn der Stativstabhalter stufenlos verstellbar, insbesondere verschiebbar und festlegbar ist. Der Stativstab kann dann noch exakter positioniert werden, was besonders beim Ausrichten von Sensoren, die beispielsweise an einer ganz bestimmten Stelle in ein auf einem Magnetrührer stehenden Gefäß eingebracht werden sollen, vorteilhaft ist.

Eine Ausführungsform der Erfindung sieht vor, daß der Stativstabhalter wenigstens einen Vorsprung aufweist, der formschlüssig an einer Führung, insbesondere einer Führungsschiene des Laborgerätes angreift. Durch die formschlüssige Verbindung ist der Stativstabhalter beim Verstellen in der Führungsschiene geführt, so daß dieser nicht seitlich aus der Führungsschiene herausrutschen oder gegenüber dieser verkippen kann. Das Verstellen des Stativstabes wird dadurch erleichtert.

Zweckmäßig ist, wenn der Stativstabhalter lösbar mit dem Laborgerät und/oder der Führung verbindbar ist. Es können dann verschiedene Stativstabhalter mit unterschiedlichen Aufnahmen an dem Laborgerät befestigt werden, so daß auch Stativstäbe mit unterschiedlichem Querschnitt und / oder mit unterschiedlichem Durchmesser, befestigt werden können.

Außerdem können mehrere Stativstabhalter gleichzeitig an dem Laborgerät befestigt werden. Bei komplexen Versuchsaufbauten, bei denen mehrere Dosierer, Zuführschläuche, Sensoren oder dergleichen an dem Laborgerät angebracht werden sollen, stehen dadurch genügend Befestigungsmöglichkeiten zur Verfügung, mit denen die einzelnen Zusatzvorrichtungen jeweils optimal ausgerichtet und fixiert werden können.

Vorteilhaft ist, wenn die Führung zum Einsetzen des Stativstabes an wenigstens einem Ende offen ist. Die formschlüssige Verbindung kann dann auf einfache Weise durch Einsetzen des Stativstabhalters an dem stirnseitig offenen Ende der Führung hergestellt werden.

Besonders zweckmäßig ist, wenn das Laborgerät an wenigstens zwei gegenüberliegenden Seiten, insbesondere an den Längsseiten, eine Führung aufweist. Der Stativstabhalter kann dann beidseitig an dem Laborgerät befestigt werden. Durch die seitliche Anbringung der Führung braucht an der Geräteoberseite kein Platz für den Stativstab beziehungsweise den Stativstabhalter freigehalten zu werden, so daß diese vollständig, beispielsweise bei Magnetrührern, zur Anbringung von Bedienungselementen, einer Heizplatte oder zum Aufstellen eines Gefäßes zur Verfügung stehen.

Eine besonders preiswert und einfach herzustellende Führung ergibt sich, wenn die Führungsschiene einen Führungsschlitz aufweist, in den der Stativstabhalter eingreift. Die Führungsschiene kann dann als Stanzteil kostengünstig und in großer Stückzahl hergestellt werden.

Dabei ist es vorteilhaft, wenn der Stativstabhalter einen hakenartigen Vorsprung aufweist, der in den Führungsschlitz eingreift und die Führungsschiene an wenigstens einem Rand, insbesondere dem oberen Rand hintergreift. Für den Eingriff des hakenartigen Vorsprunges ist dann ein Freiraum hinter der Führungsschiene vorgesehen. Der Stativstabhalter ist somit formschlüssig mit der Führungsschiene verbunden und kann dadurch beim Verschieben nicht aus der Führungsschiene herausrutschen oder verkippen.

Eine besonders günstige Ausbildung der Erfindung sieht vor, daß das Gehäuse des Laborgerätes ein Gehäuseoberteil und ein Gehäuseunterteil aufweist, daß die Führungsschiene zwei zueinander beabstandete Führungsschienenteile hat, zwischen denen der Führungsschlitz angeordnet ist und daß ein Führungsschienenteil mit dem Gehäuseoberteil und das andere mit dem Gehäuseunterteil verbunden ist, insbesondere einstückig verbunden ist. Das Laborgerätegehäuse kann dadurch besonders preiswert, praktisch aus nur zwei Teilen, hergestellt werden, in welche die Führungsschiene integriert ist.

Vorteilhaft ist, wenn zum Halten und/oder zum Festlegen des Stativstabhalters eine Klemme, insbesondere an dem Stativstabhalter, vorgesehen ist. Der Stativstabhalter kann dadurch beliebiger Position an der Führungsschiene festgelegt werden.

Eine Ausführungsform der Erfindung sieht vor, daß die Klemme als Exzenter ausgebildet ist oder durch einen Exzenter betätigbar ist. Der Exzenter bewirkt dabei eine Kraftübersetzung, die das Festklemmen des Stativstabhalters erleichtert. Eine besonders einfach aufgebaute Klemmvorrichtung ergibt sich, wenn der Exzenter und eventuell ein mit diesem verbundenes Klemmstück an dem Stativstabhalter vorgesehen ist und diesen auf der Führungsschiene festklemmt.

Zum Verstellen des Exzenters kann an dem Stativstabhalter ein Handrad, ein Hebel oder dergleichen Betätigungselement vorgesehen sein. Der Stativstabhalter kann dann ohne Werkzeug auf einfache Weise an dem Laborgerät festgelegt werden.

Eine besonders günstige Ausführungsform sieht vor, daß die Exzenterachse etwa rechtwinklig zu Längsachse des Stativstabes angeordnet ist. Das Handrad oder das Betätigungselement zum Verstellen des Exzenters kann dann seitlich vorstehend an dem Stativstabhalter angeordnet werden, so daß es besonders gut greifbar ist. Dabei können das Betätigungselement und der Exzenter einstückig ausgebildet sein.

Damit der Stativstabhalter bei der Fertigung leichter montiert werden kann, ist es vorteilhaft, wenn der Exzenter in eine Aufnahmebohrung im Gehäuse des Stativstabhalters und/oder im Klemmstück eingesteckt ist und am Außenumfang des Exzenters wenigstens ein in Richtung der Exzenterachse federnd nachgiebiger Rastvorsprung vorgesehen ist, der in Einsteckstellung den Querschnitt des Exzenters erweitert und diesen entgegen der Einsteckrichtung gegen Herausziehen aus der/den Aufnahmebohrung(en) sichert. Der Exzenter braucht dann bei der Montage nur in die Aufnahmebohrung des Klemmstückes eingesteckt zu werden, wobei die Rastvorsprünge federnd nachgeben und beim Erreichen der Einsteckstellung in die nichtausgelenkte, querschnittserweiternde Position zurückkehren und dann den Exzenter gegen Herausziehen aus der Aufnahmebohrung sichern.

Zweckmäßig ist, wenn die Aufnahme des Stativstabhalters als Gewindebohrung oder als Gewindestab ausgebildet ist an der/dem der Stativstab ausgebildet ist. Der Stativstab kann dann besonders einfach und stabil an dem Stativstabhalter befestigt werden.

Nachfolgend ist die Erfindung anhand eines Ausführungsbeispieles näher erläutert.

Es zeigen in unterschiedlichen Maßstäben:
- Fig. 1: eine Seitenansicht eines Magnetrührers mit einem einen Stativstab tragenden Stativstabhalter, der an einer längsseitig an dem Magnetrührergehäuse vorgesehenen Führungsschiene verschiebbar und festlegbar ist und in der ein weiterer Stativstabhalter mit Stativstab strichliniert angedeutet ist,
- Fig. 2: eine Aufsicht auf den in Figur 1 gezeigten Stativstabhalter mit eingesetztem Stativstab,
- Fig. 3: einen Längsschnitt durch die Mittelebene des in Figur 1 gezeigten Stativstabhalters, der in die Führung des Magnetrührergehäuses eingesetzt und an dieser festgeklemmt ist,
- Fig. 4: eine rückseitige Ansicht des Stativstabhalters und
- Fig. 5: eine Seitenansicht auf einen Stativstabhalter ähnlich dem in Figur 1, wobei die in den Stativstabhalter eingreifende Führung des Magnetrührgehäuses strichliniert dargestellt ist.

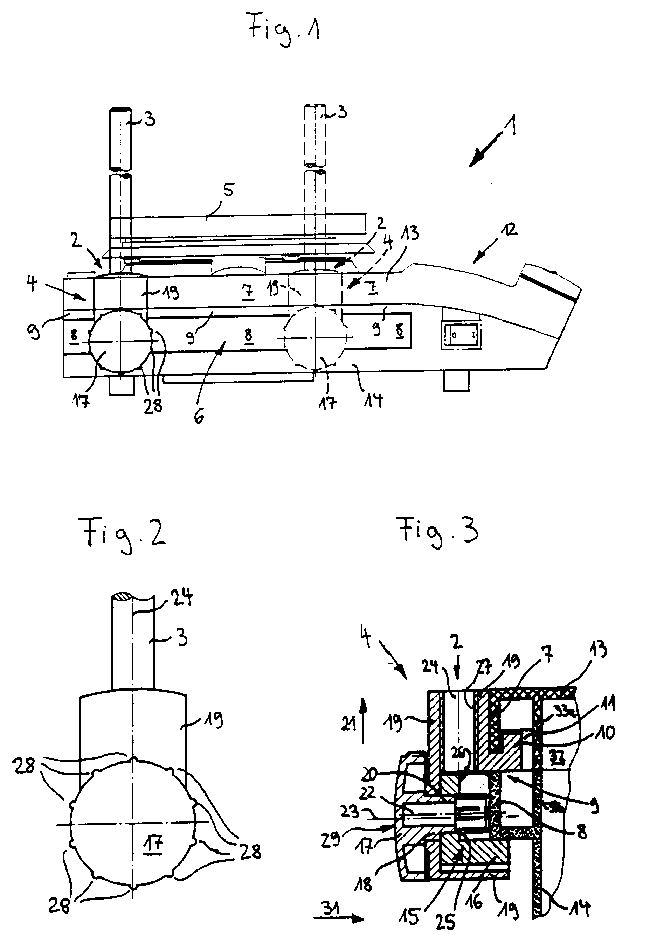

Ein Magnetrührer 1 (Figur 1) hat eine Aufnahme 2 für einen Stativstab 3, die in einem separaten, an dem Magnetrührer 1 verstellbar befestigten und festlegbaren Stativstabhalter 4 angeordnet ist. Der Stativstab 3 kann dadurch an unterschiedlichen Stellen an dem Magnetrührer 1 fixiert werden, so daß die daran angeschlossenen Zusatzvorrichtungen, beispielsweise ein Thermometer zum Messen der Temperatur eines zu rührenden Mediums, Zuführ- oder Absaugschläuche für ein auf der Heizplatte 5 befindliches Gefäß, oder ein optischer Sensor zur Gefäßkontrolle, jeweils in der gewünschten Lage positioniert und fixiert werden können.

Der Magnetrührer 1 weist an seinen beiden Längsseiten eine Führung 6 auf, in welcher der Stativstabhalter 4 stufenlos verstellbar und festlegbar ist. Der Stativstabhalter 4 ist lösbar mit der Führung 6 des Magnetrührers 1 verbunden. Dadurch können mehrere Stativstabhalter 4 in die Führung 6 eingesetzt werden, so daß bei Bedarf mehrere Stativstäbe 3 gleichzeitig an dem Magnetrührer 1 befestigt werden können. Bei komplexen Versuchsaufbauten, bei denen mehrere Sensoren, Dosierer, Schläuche oder dergleichen Zusatzvorrichtungen an dem Magnetrührer 1 benötigt werden, stehen dadurch ausreichend Befestigungsmöglichkeiten zur Verfügung. Außerdem können Stativstabhalter 4 mit unterschiedlichen Aufnahmen 2 in die Führung 6 eingesetzt werden, so daß auch Stativstäbe mit unterschiedlichen Querschnitten oder unterschiedlichen Durchmessern an dem Magnetrührer 1 befestigt werden können.

Da an beiden Längsseiten des Magnetrührers 1 Führungen 6 vorgesehen sind, ergeben sich zusätzliche Befestigungsmöglichkeiten für Stativstäbe 3, was besonders dann vorteilhaft ist, wenn aus unterschiedlichen Richtungen Schläuche oder Meßkabel an ein auf der Heizplatte 5 befindliches Gefäß herangeführt werden sollen.

Die Führung 6 ist als Führungsschiene mit einem oberen und einem unteren Führungsschienenteil 7, 8 und einem dazwischenliegenden Führungsschlitz 9 ausgebildet. Der Stativstabhalter 4 weist einen hakenartigen Vorsprung 10 auf (Figur 3), der in den Führungsschlitz 9 eingreift und das obere Führungsschienenteil 7 hintergreift. Zum Eingriff des hakenartigen Vorsprunges 10 ist hinter dem oberen Führungsschienenteil 7, etwa über die gesamte Länge der Führung 6, ein Freiraum 11 vorgesehen. Der hakenartige Vorsprunges 10 erstreckt sich etwa über die gesamte Breite des Stativstabhalters (Figur 4). Der Stativstabhalter 4 ist dadurch formschlüssig mit der Führung 6 verbunden, so daß der Stativstab 3 und die daran befestigten Zusatzvorrichtungen beim Verschieben des Stativstabhalters 4 nicht verkippen können. Außerdem verhindert der hakenartige Vorsprung 10, daß der Stativstabhalter 4 beim Verstellen versehentlich aus der Führung 6 herausgezogen wird. Zwischen dem Gehäuseinnraum 32 des Magnetrührer-Gehäuses 12 und dem Freiraum 11 ist eine Trennwand 33a, 33b vorgesehen, die das Eindringen von Schmutz in den Gehäuseinnenraum 32 verhindert und außerdem die mechanische Stabilität des Gehäuses 12 verbessert.

Die Führung 6 und der Führungsschlitz 9 sind an ihren stirnseitigen Enden offen, damit die Stativstabhalter 4 besser in die Führung 6 eingesetzt werden können.

Das Gehäuse 12 des Magnetrührers 1 hat ein etwa schalenförmig ausgebildetes Gehäuseoberteil 13 und ein ebenfalls etwa etwa schalenförmig ausgebildetes Gehäuseunterteil 14, wobei das obere Führungsschienenteil 7 mit dem Gehäuseoberteil 13 und das untere Führungsschienenteil 8 mit dem Gehäuseunterteil 14 jeweils einstückig ausgebildet ist. Das gesamte Magnetrührergehäuse 12 kann dadurch einschließlich der Führung 6 aus nur zwei Spritzgußteilen besonders kostengünstig hergestellt werden.

Zum Festlegen des Stativstabhalters 4 in der gewünschten Position ist an dem Stativstabhalter 4 eine Klemme 15 vorgesehen, mit der das untere Führungsschienenteil 8 zwischen einem Klemmstück 16 und dem hakenartigen Vorsprung 10 einklemmbar ist. An dem Stativstabhalter 4 ist außenseitig ein Handrad 17 angebracht, das mit einer Welle 18 einstückig verbunden ist, die in eine Bohrung im Gehäuse 19 des Stativstabhalters 4 eingesteckt ist und innenseitig einen Exzenter 20 trägt, der eine Aufnahmebohrung in dem Klemmstück 16 durchsetzt. Durch entsprechendes Verdrehen des Handrades 17 kann das Klemmstück 16 in Klemmrichtung 21 verschoben werden, wobei das untere Führungsschienenteil 8 zwischen dem Klemmstück 16 und dem hakenartigen Vorsprung 10 eingeklemmt und dadurch der Stativstabhalter 4 an der Führung 6 festgelegt wird. Dabei bewirkt die exzentrische Lagerung des Klemmstückes 16 eine Kraftübersetzung, so daß mit einer vergleichsweise geringen Handkraft eine große Klemmkraft aufgebracht werden kann.

Der Exzenter 20 und die Welle 18 sind einstückig mit dem Handrad 17 ausgebildet und die Exzenterachse 22 sowie die Handradachse 23 sind etwa senkrecht zur Längsachse 24 des Stativstabes 3 ausgerichtet. Das Handrad 17 kann dadurch seitlich an dem Stativstabhalter 4 angeordnet werden, so daß es besonders gut greifbar ist. Der Exzenter 20 hat drei gleichmäßig über seinen Umfang verteilte Rastvorsprünge 25, die in Einsteckstellung an der Innenwand 26 des Klemmstückes 16 anliegen und das Handrad 17 sowie das Klemmstück 16 in axialer Richtung im Gehäuse 19 des Stativstabhalter 4 fixieren.

Um eine besonders einfache Montage des Stativstabhalters zu ermöglichen, sind die Rastvorsprünge 25 in Richtung der Exzenterachse 22 federnd auslenkbar. Der Exzenter 20 braucht dann bei der Montage nur in die Aufnahmebohrung des Klemmstückes 16 eingesteckt zu werden, wobei die Rastvorsprünge 25 in Richtung der Exzenterachse 22 federnd nachgeben und beim Erreichen der Einsteckstellung in ihre ursprüngliche Position zurückkehren und dann an der Innenwand 26 des Klemmstückes 16 anliegen. Das Handrad 17, die Welle 18 und der Exzenter 20 sind dadurch gegen axiales Herausziehen entgegen der Einsteckrichtung 31 aus der Aufnahmebohrung gesichert.

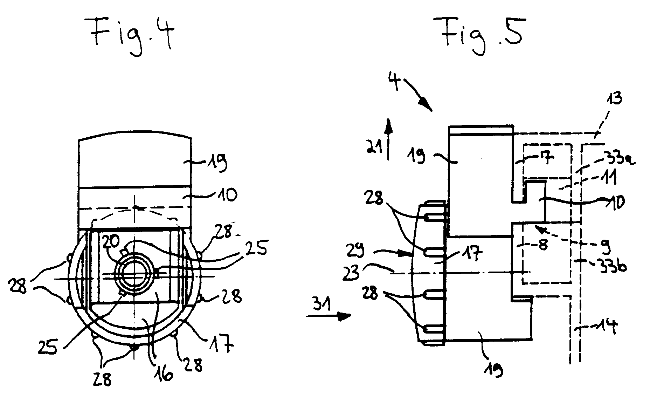

Die Figuren 2, 4 und 5 lassen die gleichmäßig über den Außenumfang des Handrades 17 verteilten, in axialer Richtung verlaufenden Rippen 28 erkennen, welche die Griffigkeit des Handrades 17 verbessern sollen.

Die Aufnahme 2 des Stativstabhalters 4 ist als Gewindebohrung 27 ausgelegt, in die der Stativstab 3 mit einem entsprechenden Gegengewinde einschraubbar ist. Der Stativstab 3 kann dadurch auf einfache Weise an dem Stativstabhalter 4 befestigt werden.

Das Laborgerät, insbesondere ein Magnetrührer 1 oder ein Schüttelgerät, hat eine Aufnahme 2 für einen Stativstab 3, die an einem separaten Stativstabhalter 4 vorgesehen ist, der an dem Laborgerät verstellbar befestigt und festlegbar ist. Der Stativstab 3 kann dadurch an unterschiedlichen Stellen am Gehäuse des Laborgerätes angeordnet werden, so daß die daran befestigten Zusatzvorrichtungen, insbesondere Sensoren, Dosierer oder Schläuche, besser in der jeweils gewünschten Lage fixiert werden können. Außerdem können mehrere Stativstabhalter 4 mit jeweils einem Stativstab 3 an verschiedenen Stellen des Laborgerätes gleichzeitig befestigt werden, so daß auch bei komplexen Versuchsaufbauten genügend Befestigungsmöglichkeiten für Zusatzvorrichtungen vorhanden sind.

## Patentansprüche

1. Laborgerät, insbesondere Magnetrührer 1 oder Schüttelgerät mit einer Aufnahme für einen Stativstab, **dadurch gekennzeichnet**, daß die Aufnahme (2) an einem separaten Stativstabhalter (4) vorgesehen ist und daß der Stativstabhalter (4) an dem Laborgerät verstellbar befestigt und festlegbar ist.

2. Laborgerät nach Anspruch 1, dadurch gekennzeichnet, daß der Stativstabhalter (4) stufenlos verstellbar, insbesondere verschiebbar und festlegbar ist.

3. Laborgerät nach Anspruch 1 oder 2, dadurch gekennzeichnet, daß der Stativstabhalter (4) wenigstens einen Vorsprung aufweist, der formschlüssig an einer Führung (6), insbesondere einer Führungsschiene, des Laborgerätes angreift.

4. Laborgerät nach einem der Ansprüche 1 bis 3, dadurch gekennzeichnet, daß der Stativstabhalter (4) lösbar mit dem Laborgerät und/oder der Führung (6) verbindbar ist.

5. Laborgerät nach einem der Ansprüche 1 bis 4, dadurch gekennzeichnet, daß mehrere Stativstabhalter (4) mit dem Laborgerät und/oder der Führung (6) lösbar verbindbar sind.

6. Laborgerät nach einem der Ansprüche 1 bis 5, dadurch gekennzeichnet, daß die Führung (6) zum Einsetzen des Stativstabes (3) an wenigstens einem Ende offen ist.

7. Laborgerät nach einem der Ansprüche 1 bis 6, dadurch gekennzeichnet, daß das Laborgerät an wenigstens zwei gegenüberliegenden Seiten, insbesondere an den Längsseiten, eine Führung (6) aufweist.

8. Laborgerät nach einem der Ansprüche 1 bis 7, dadurch gekennzeichnet, daß die Führungsschiene einen Führungsschlitz (9) aufweist, in den der Stativstabhalter (4) eingreift.

9. Laborgerät nach einem der Ansprüche 1 bis 8, dadurch gekennzeichnet, daß der Stativstabhalter (4) einen hakenartigen Vorsprung (10) aufweist, der in den Führungsschlitz (9) eingreift und die Führungsschiene an wenigstens einem Rand, insbesondere dem oberen Rand hintergreift.

10. Laborgerät nach einem der Ansprüche 1 bis 9, dadurch gekennzeichnet, daß das Gehäuse (12) des Laborgerätes ein Gehäuseoberteil (13) und ein Gehäuseunterteil (14) aufweist, daß die Führungsschiene zwei zueinander beabstandete Führungsschienenteile (7, 8) hat, zwischen denen der Führungsschlitz angeordnet ist und daß ein Führungsschienenteil mit dem Gehäuseoberteil (13) und das andere mit dem Gehäuseunterteil (14) verbunden ist, insbesondere einstückig verbunden ist.

11. Laborgerät nach einem der Ansprüche 1 bis 10, dadurch gekennzeichnet, daß zum Halten und/oder zum Festlegen des Stativstabhalters (4) eine Klemme (15), insbesondere an dem Stativstabhalter (4) vorgesehen ist.

12. Laborgerät nach einem der Ansprüche 1 bis 11, dadurch gekennzeichnet, daß die Klemme (15) als Exzenter ausgebildet ist oder durch einen Exzenter (20) betätigbar ist.

13. Laborgerät nach einem der Ansprüche 1 bis 12, dadurch gekennzeichnet, daß zum Verstellen des Exzenters (20) an dem Stativstabhalter (4) ein Handrad (17), ein Hebel oder dergleichen Bedienungselement vorgesehen ist.

14. Laborgerät nach einem der Ansprüche 1 bis 13, dadurch gekennzeichnet, daß die Exzenterachse (22) etwa rechtwinklig zur Längsachse (24) des Stativstabes (3) angeordnet ist.

15. Laborgerät nach einem der Ansprüche 1 bis 14, dadurch gekennzeichnet, daß der Exzenter (20) in eine Aufnahmebohrung im Gehäuse (19) des Stativstabhalters (4) und/oder im Klemmstück (16) eingesteckt ist und daß am Außenumfang des Exzenters (20) wenigstens ein in Richtung der Exzenterachse (22) federnd nachgiebiger Rastvorsprung (25) vorgesehen ist, der in Einsteckstellung den Querschnitt des Exzenters (20) erweitert und diesen entgegen der Einsteckrichtung (31) gegen Herausziehen aus der/den Aufnahmebohrung(en) sichert.

16. Laborgerät nach einem der Ansprüche 1 bis 15, dadurch gekennzeichnet, daß die Aufnahme (2) des Stativstabhalters (4) als Gewindebohrung (27) oder als Gewindestab ausgebildet ist, an der/dem der Stativstab (3) anschraubbar ist.
